**Europäisches Patentamt**

**European Patent Office**

**Office européen des brevets**

(19)

(11) Numéro de publication: **0 012 684**
A1

# (12) DEMANDE DE BREVET EUROPEEN

(21) Numéro de dépôt: 79400993.6

(22) Date de dépôt: 10.12.79

(51) Int. Cl.³: **A 01 D 85/00, A 01 F 25/14**

(30) Priorité: **12.12.78 FR 7835495**

(43) Date de publication de la demande: **25.06.80**
**Bulletin 80/13**

(84) Etats contractants désignés: **AT BE CH DE GB IT LU NL SE**

(71) Demandeur: **Bourrieu, Philippe, Lacanau de Mios, F-33380 Biganos (FR)**

(72) Inventeur: **Bourrieu, Philippe, Lacanau de Mios, F-33380 Biganos (FR)**

(74) Mandataire: **Trolliet, Jean-Claude et al, Cabinet BURDIPAT 98, cours de Verdun, F-33000 Bordeaux (FR)**

(54) **Procédé et dispositif pour l'ensilage des fourrages.**

(57) L'invention concerne un procédé et un dispositif permettant l'ensilage des fourrages au moyen d'une presse de ramassage à enroulement de fourrage consistant à enrober les balles pressées d'un film plastique 4 enroulé sur un rouleau 4a disposé entre la tête de ramassage 5 et le rouleau presseur 6, l'arbre 1 est relié à un organe moteur provoquant de déroulement du film plastique 4 avant la fin du ramassage du fourrage constituant une balle de sorte que l'extrémité du film plastique 4 soit maintenue pressée par une partie du fourrage et ledit film plastique entraîné durant la rotation de la balle alors que le ramassage du fourrage est interrompu, le film plastique est détaché du rouleau 4a lorsque la balle est enrobée par un couteau mobile 11 fixé sur une chaîne 12, ledit film plastique étant maintenu sur la balle par collage ou ficelage.

EP 0 012 684 A1

1

# Procédé et Dispositif pour l'ensilage des fourrages

La présente invention concerne un procédé et un dispositif permettant l'ensilage du fourrage au moyen d'une presse à fourrage.

On connaît l'ensilage des fourrages verts consistant à stocker lesdits fourrages dans des silos, soit en l'état ou sous atmosphère d'azote afin d'empêcher la fermentation, ce genre d'ensilage a pour inconvénients un investissement de base trés important au niveau de la construction du silo et de ses installations annexes, compte tenu de l'implantation fixe desdits silos celle-ci donne lieu à des navettes et à des manutentions importantes.

L'invention a pour but de palier aux différents inconvénients. L'invention a en conséquence pour objet un procédé d'ensilage des fourrages, tant verts que secs ou intermédiaires, consistant au moyen d'une presse de ramassage à enroulement de fourrage à enrober la balle pressée obtenue d'un film en matière plastique de sorte à empêcher le passage de l'air au travers dudit fourrage sur au moins le pourtour latéral de la balle, la ou les balles ainsi enrobées pouvant être stockées en n'importe quel endroit, le tas selon la durée de stockage souhaitée pouvant être recouvert d'une bâche en matière plastique, les extrémités en contact avec le sol étant recouvertes de terre sur tout leur pourtour pour isoler de l'air lesdites balles.

Le dispositif permettant l'enrobage des balles comporte un arbre sur lequel est enfilé un rouleau de matière plastique en feuilles à proximité

2

de la tête de ramassage de la presse, l'arbre est maintenu sur l'ossature de la presse au moyen de paliers, il est relié à un organe moteur provoquant le déroulement du film plastique juste avant la fin du ramassage du fourrage constituant une balle et ce afin que l'extrémité du film soit maintenue pressée par une partie du fourrage de manière à entraîner ledit film durant la rotation de la balle alors que le ramassage du fourrage est interrompu.

Le film plastique une fois la balle enrobée est détaché du rouleau au moyen d'un couteau mobile disposé sous ledit rouleau, le maintien du film enrobant la balle est obtenu par collage ou ficelage. Selon un autre mode de réalisation, le film plastique en rouleau peut être partiellement prédécoupé à la dimension correspondant au développement de la surface latérale des balles, de ce fait le dispositif se compose exclusivement d'un arbre support de rouleau et d'un dispositif d'entraînement dudit arbre permettant le déroulement du film plastique celui-ci étant détaché du rouleau lors de l'enrobage d'une balle par traction à la fin de l'enrobage, le déroulement dudit film étant alors interrompu tandis que la balle dans la machine est entraînée en rotation.

D'autres caractéristiques et avantages de l'invention ressortiront plus clairement de la description qui va suivre faite en regard des dessins joints donnés uniquement à titre d'exemple, où :
     - la figure 1 est une vue en perspective partielle du dispositif avec couteau,
     - la figure 2, une vue de face,
     - la figure 3, une vue de dessus,
     - la figure 4, une vue en coupe du dispositif et d'une balle.

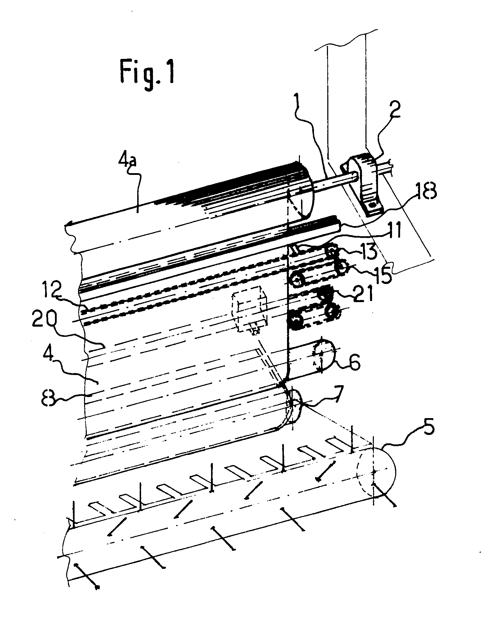

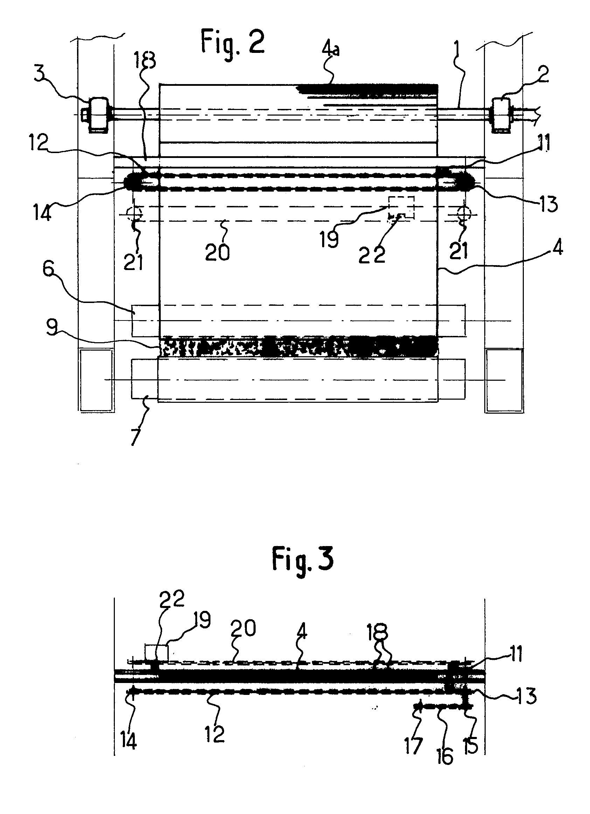

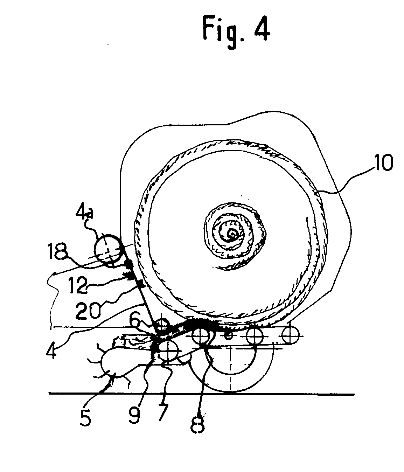

Tel que représenté figures 1, 2, 3 et 4, le dispositif comporte un arbre 1 maintenu par deux paliers 2 et 3 fixés sur l'ossature de la presse, sur l'arbre 1 s'enfile et est maintenu un rouleau 4a de film 4 en matière plastique. L'arbre est placé entre la tête de ramassage 5 et les rouleaux presseurs 6 et 7 de sorte que, lors du déroulement du film plas-

3

tique 4 au moyen d'organes moteurs non représentés provoquant la rotation de l'arbre, tels que dispositif mécanique à action manuelle ou dispositif électrique ou pneumatique à déclenchement manuel ou automatique et synchronisé, l'extrémité 8 du film plastique 4 soit pincée entre le fourrage 9 et le rouleau 6 juste avant la fin du ramassage du fourrage constituant une balle et ce afin que le film soit entraîné durant la rotation de la balle dans la machine pour que celui-ci enrobe la balle sur toute sa surface latérale, le ramassage du fourrage étant interrompu à ce moment-là.

Une fois la balle 10 enrobée intégralement, le film plastique 4 du rouleau 4a est détaché au moyen d'un couteau mobile 11 se déplaçant parallèlement au rouleau de film 4a, ledit couteau est fixé sur une chaîne 12 tendue entre deux pignons 13 et 14 fixés sur l'ossature de la presse par exemple, le déplacement du couteau 11 est obtenu par la mise en rotation du pignon 13 au moyen d'un pignon rapporté 15 recevant une chaîne 16 d'entraînement tendue sur un pignon 17 de commande, ladite commande pouvant être une manivelle mue manuellement ou un moteur électrique ou pneumatique à mouvement alternatif, le pignon 17 étant alors solidaire de l'arbre du moteur.

Afin de maintenir le film plastique durant son déroulement et durant l'action du couteau, un guide 18 est prévu et est disposé entre le rouleau 4a et le couteau 11.

Selon une autre réalisation, le film plastique 4 en rouleau 4a peut être partiellement prédécoupé et ce de sorte qu'une fois la balle 10 entièrement enrobée, par simple traction sur le film provoquée par l'arrêt de l'entraînement en rotation du rouleau 4a et alors que la balle 10 est entraînée en rotation dans la machine, le film 10 soit détaché du rouleau, de ce fait le dispositif ne comporte plus de couteau 11.

Une fois la balle de fourrage enrobée, le film plastique est maintenu

4

sur celle-ci par collage, celui-ci étant effectué au moyen d'un distributeur 22 relié à un réservoir 19, le distributeur 22 et réservoir 19 sont mobiles, ils sont fixés sur une chaîne 20 tendue entre deux pignons 21, leur déplacement est engendré comme précédemment décrit pour le déplacement du couteau 11, l'encollage est réalisé avant le détachement du film plastique 4 de sorte que celui-ci soit tendu pour que le distributeur 22 soit en appui sur le côté correspondant dudit film et dépose la colle nécessaire. Selon un autre mode, le film peut être maintenu sur la balle par ficelage prévu d'origine sur les machines.

Les balles enrobées peuvent être stockées en l'état dans des hangars ou sous des bâches en matière plastique, leurs extrémités reposant au sol étant recouvertes sur tout leur pourtour de terre afin de les isoler de l'air. Il est aussi possible pour parfaire l'isolement du fourrage de chaque balle, de rapporter un film plastique en leurs extrémités, le film rapporté est alors collé sur film servant à enrober la face latérale de la balle.

1

# REVENDICATIONS

1°) Procédé d'ensilage des fourrages au moyen d'une presse de ramassage à enroulement caractérisé par le fait qu'il consiste à enrober les balles pressées d'un film en matière plastique sur au moins leur pour tour latéral de sorte à empécher le passage de l'air au travers dudit fourrage.

2°) Procédé d'ensilage des fourrages selon la revendication 1 caractérisé par l'extrémité des balles pouvant être recouverte d'un film plastique rapporté et collé sur le film d'enrobage de la face latérale.

3°) Procédé d'ensilage des fourrages selon la revendication 1 caractérisé par le stockage des balles enrobées dans des hangars ou sous des bâches en matière plastique leur extrémité reposant au sol étant recouverte de terre sur tout leur pourtour afin d'isoler le fourrage de l'air.

4°) Dispositif permettant l'ensilage des fourrages au moyen d'une presse de ramassage à enroulement caractérisé par le fait qu'il comporte fixé sur l'ossature de la presse un arbre support de rouleau de film plastique disposé entre la tête de ramassage et les rouleaux presseurs, la rotation de l'arbre au moyen d'organes moteurs provoquant le déroulement du film plastique avant la fin du ramassage du fourrage constituant une balle de sorte que l'extrémité du film plastique soit pincée par une partie du fourrage afin de provoquer son entraînement et de ce fait l'enrobage de la balle durant la rotation de celle-ci dans la machine alors que le ramassage est interrompu, le film plastique détaché du rouleau une fois la balle enrobée est maintenu sur la balle par collage ou ficelage.

5°) Dispositif permettant l'ensilage des fourrages selon la revendication 4 caractérisé par le film plastique détaché du rouleau par un couteau mobile se déplaçant parallèlement au rouleau.

2

6°) Dispositif permettant l'ensilage des fourrages selon la revendication 4 caractérisé par le film plastique détaché du rouleau par simple traction lors de l'arrêt de son déroulement et l'entraînement en rotation de la balle dans la machine, le film étant partiellement prédécoupé suivant la dimension de la balle.

7°) Dispositif permettant l'ensilage des fourrages selon la revendication 4 caractérisé par le film plastique dirigé et maintenu par un guide parallèle au rouleau placé sous celui-ci.

8°) Dispositif permettant l'ensilage des fourrages selon la revendication 4 caractérisé par l'encollage du film plastique avant d'être détaché du rouleau par un distributeur mobile se déplaçant parallèlement au rouleau.

0012684

1/3

Fig.1

Fig. 2

Fig. 3

3/3

Fig. 4

0012684

Office européen des brevets

Numéro de la demande

EP 79 40 0993

# RAPPORT DE RECHERCHE EUROPEENNE

| Catégorie | Citation du document avec indication, en cas de besoin, des parties pertinentes | Revendica-tion concernée |
|---|---|---|
| | **DOCUMENTS CONSIDERES COMME PERTINENTS** | |
| | <u>AU - A - 44 895/72</u> (GEARY)· <br> * Page 5; figures 1,2 * | 1,4 |
| | -- | |
| | <u>DE - A - 2 705 101</u> (WELGER) <br> * Page 9, deux derniers paragraphes; pages 10,11; figures 1-3 * | 1,3-5, 7 |
| | -- | |
| | <u>DE - A - 2 219 976</u> (KRONE) <br> * Page 8, paragraphes 5,6; figure 6 * | 1,4,7 |
| | -- | |
| A | <u>DE - A - 1 757 733</u> (DUCKER) <br> * Page 6, paragraphes 2,3; page 7 * | 4 |
| | -- | |
| A | <u>BE - A - 769 841</u> (FABRY) <br> * Pages 3,4; figures 1,2 * | 1,5 |
| | -- | |
| P | <u>US - A - 4 173 112</u> (MEINERS) <br> * Colonne 3, lignes 45-68; colonnes 4-5; colonne 6, lignes 1-51; figures 1-7 * | 1,2,4, 5,8 |
| | ---- | |

**CLASSEMENT DE LA DEMANDE (Int. Cl. 3)**

A 01 D 85/00
A 01 F 25/14

**DOMAINES TECHNIQUES RECHERCHES (Int. Cl. 3)**

A 01 D
A 01 F

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons

&: membre de la même famille, document correspondant

| X | Le présent rapport de recherche a été établi pour toutes les revendications | | |
|---|---|---|---|
| Lieu de la recherche <br> La Haye | Date d'achèvement de la recherche <br> 07-03-1980 | Examinateur <br> VERMANDER | |

OEB Form 1503.1   06.78